# EUROPÄISCHE PATENTANMELDUNG

(11) **EP 4 135 267 A2**
(43) Veröffentlichungstag der Anmeldung: **15.02.2023**
(21) Anmeldenummer: 22189079.1
(22) Anmeldetag: 05.08.2022
(51) Int. Cl.: H04L 12/28, E06B 7/00, E06B 9/00

(54) **VERFAHREN ZUM BETREIBEN EINES NETZWERKS SOWIE ENTSPRECHENDES NETZWERK**

(30) Priorität: 11.08.2021 DE 102021208794
(71) Anmelder: Roto Frank Dachsystem-Technologie GmbH, 97980 Bad Mergentheim (DE)
(72) Erfinder: DRES, Martin, 97996 Niederstetten (DE)
(74) Vertreter: Dietz, Christopher Friedrich

(57) **Zusammenfassung**

Die Erfindung betrifft ein Verfahren zum Betreiben eines Netzwerks (11), wobei das Netzwerk (11) mehrere Gebäudeverschlusselemente (3) sowie eine, insbesondere von den Gebäudeverschlusselementen (3) beabstandete, Zentralrecheneinrichtung (10) aufweist. Dabei ist vorgesehen, dass für mehrere der Gebäudeverschlusselemente (3) unter jeweiliger Verwendung wenigstens eines Zustandsgrößensensors ein Wert einer das jeweilige Gebäudeverschlusselement (3) betreffenden Zustandsgröße ermittelt, über eine Datenübertragungsverbindung an die Zentralrecheneinrichtung (10) übermittelt und in dem entsprechenden Gebäudeverschlussdatensatz (12) als Bestandteil eines Zustandsgrößenverlaufs über der Zeit abgespeichert wird, wobei aus dem Wert der Zustandsgröße und/oder dem Zustandsgrößenverlauf sowie einem eines der Gebäudeverschlusselemente (3) beschreibenden Parameter eine Information und/oder eine Handlungsempfehlung für das Gebäudeverschlusselement (3) bestimmt und an eine Anzeigevorrichtung und/oder das Gebäudeverschlusselement (3) übermittelt wird. Die Erfindung betrifft weiterhin ein Netzwerk (11) mit mehreren Gebäudeverschlusselementen (3) sowie einer Zentralrecheneinrichtung (10).

## Beschreibung

Die Erfindung betrifft ein Verfahren zum Betreiben eines Netzwerks, wobei das Netzwerk mehrere Gebäudeverschlusselemente sowie eine, insbesondere von den Gebäudeverschlusselementen beabstandete, Zentralrecheneinrichtung aufweist. Die Erfindung betrifft weiterhin ein entsprechendes Netzwerk.

Aus dem Stand der Technik ist beispielsweise die Druckschrift US 10,689,898 B2 bekannt. Diese beschreibt ein ferngesteuertes Türschließbetriebssystem, das auf einem zentralen Server mit einer Backend-Datenbank basiert, die mehrere steuerbare Türen und mehrere autorisierte Benutzer sowie entsprechende Berechtigungsnachweise enthält. Eine Türschnittstelleneinheit ist dazu vorgesehen, mit einem autorisierten Benutzer zu kommunizieren, um einen Live-Videostream einer jeweiligen Tür zu liefern und Türöffnungs- und -schließbefehle von dem autorisierten Benutzer auszuführen. Ein mobiles Gerät verfügt über ein Benutzeranwendungsprogramm, das dazu vorgesehen ist, mit dem zentralen Server und der Türschnittstelleneinheit zu interagieren, um Konfigurationsdaten zu erhalten, den autorisierten Benutzer zu authentifizieren, den Live-Videostream zu empfangen und Türöffnungs- und -schließbefehle einzuleiten. Die sichere Durchführung des Türöffnungs-/-schließvorgangs wird durch eine maximierte Verwendung der Videoüberwachung vor und während des Vorgangs und durch die Durchführung separater Sicherheitsauthentifizierungen für Videostreaming und Türbetriebsanforderungen unterstützt.

Es ist Aufgabe der Erfindung, ein Verfahren zum Betreiben eines Netzwerks vorzuschlagen, welches gegenüber bekannten Verfahren Vorteile aufweist, insbesondere einen besonders komfortablen und zuverlässigen Betrieb der Gebäudeverschlusselemente sicherstellt.

Dies wird erfindungsgemäß mit einem Verfahren zum Betreiben eines Netzwerks mit den Merkmalen des Anspruchs 1 erreicht. Dabei ist vorgesehen, dass für mehrere, insbesondere jedes, der Gebäudeverschlusselemente unter jeweiliger Verwendung wenigstens eines Zustandsgrößensensors ein Wert einer das jeweilige Gebäudeverschlusselement betreffenden Zustandsgröße ermittelt, über eine Datenübertragungsverbindung an die Zentralrecheneinrichtung übermittelt und in dem entsprechenden Gebäudeverschlussdatensatz als Bestandteil eines Zustandsgrößenverlaufs über der Zeit abgespeichert wird, wobei aus dem Wert der Zustandsgröße und/oder dem Zustandsgrößenverlauf sowie einem eines der Gebäudeverschlusselemente beschreibenden Parameter eine Information und/oder eine Handlungsempfehlung für das Gebäudeverschlusselemente bestimmt und an eine Anzeigevorrichtung und/oder das Gebäudeverschlusselement übermittelt wird.

Vorteilhafte Ausgestaltungen mit zweckmäßigen Weiterbildungen der Erfindung sind in den abhängigen Ansprüchen angegeben.

Das Verfahren dient dem Betreiben des Netzwerks, das zumindest über die mehreren Gebäudeverschlusselemente und die Zentralrecheneinrichtung verfügt. Die Zentralrecheneinrichtung kann einem der Gebäudeverschlusselemente zugeordnet sein. Bevorzugt ist sie jedoch von allen Gebäudeverschlusselementen beabstandet angeordnet. Insbesondere ist die Zentralrecheneinrichtung ein Rechenzentrum oder zumindest ein Bestandteil eines solchen. Die Gebäudeverschlusselemente und die Zentralrecheneinrichtung sind jeweils über eine Datenübertragungsverbindung miteinander verbunden. Das bedeutet, dass zwischen jeder der Gebäudeverschlusselemente und der Zentralrecheneinrichtung jeweils eine solche Datenverbindung vorliegt.

Hierbei ist es nicht notwendig, dass die Datenübertragungsverbindung unmittelbar zwischen dem jeweiligen Gebäudeverschlusselement und der Zentralrecheneinrichtung hergestellt ist, wenngleich dies selbstverständlich besonders vorteilhaft ist. Vielmehr kann die Datenübertragungsverbindung zwischen zumindest einem ersten der Gebäudeverschlusselemente und der Zentralrecheneinrichtung auch lediglich mittelbar hergestellt sein, beispielsweise über ein zweites der Gebäudeverschlusselemente. In diesem Fall liegt zwischen dem ersten Gebäudeverschlusselement und dem zweiten Gebäudeverschlusselement eine erste Datenübertragungsverbindung vor und eine zweite Datenübertragungsverbindung ist zwischen dem zweiten Gebäudeverschlusselement und der Zentralrecheneinrichtung hergestellt. Das erste Gebäudeverschlusselement kann nun über die erste Datenübertragungsverbindung und die zweite Datenübertragungsverbindung an die Zentralrecheneinrichtung datentechnisch angebunden sein.

Das Gebäudeverschlusselement kann Bestandteil eines Gebäudes sein, jedoch selbstverständlich bis zu seiner Montage an dem Gebäude auch separat von diesem vorliegen. Das Gebäude weist eine Gebäudehülle auf, zur Anordnung an beziehungsweise in welcher das Gebäudeverschlusselement vorgesehen und ausgestaltet ist. Die Gebäudehülle liegt zwischen einer Außenumgebung des Gebäudes und einem Innenraum des Gebäudes vor, separiert diese also voneinander. Die Gebäudehülle ist vorzugsweise als Wand des Gebäudes oder als Dach des Gebäudes ausgestaltet. Das Gebäudeverschlusselement dient dem zumindest zeitweisen Verschließen des Gebäudes, insbesondere dem zumindest zeitweisen Verschließen einer in der Gebäudehülle ausgebildeten Ausnehmung. Die Ausnehmung, welche mithilfe des Gebäudeverschlusselements zumindest zeitweise verschlossen ist, liegt insoweit entweder als Wandöffnung oder als Dachöffnung vor.

Die Wand ist insbesondere als Außenwand beziehungsweise Außenmauer des Gebäudes ausgestaltet. Das Dach setzt sich hingegen im Wesentlichen aus einer Dachkonstruktion und einer Dachhaut zusammen. Die Dachkonstruktion weist beispielsweise einen oder mehrere Dachsparren sowie eine oder mehrere Dachlatten auf. Die Dachlatten können hierbei in Konterlatten und Traglatten unterteilt werden, wobei das Vorliegen der Konterlatten rein optional ist. Die Traglatten sind üblicherweise angewinkelt, insbesondere senkrecht, zu den Dachsparren angeordnet und an diesen befestigt. Die Konterlatten verlaufen hingegen bevorzugt bezüglich der Traglatten angewinkelt, insbesondere senkrecht zu ihnen, und/oder parallel oder zumindest im Wesentlichen parallel zu den Dachsparren.

Die Dachhaut ist außenseitig an der Dachkonstruktion angeordnet beziehungsweise befestigt, begrenzt die Dachkonstruktion also in Richtung der Außenumgebung. Unter der Dachhaut ist insbesondere eine Dachdeckung oder eine Dachabdichtung zu verstehen. Die Dachdeckung weist beispielsweise eine Vielzahl von Dachziegeln, Dachsteinen, Dachschindeln oder dergleichen auf. Nach innen, also in Richtung des Innenraums, wird die Dachkonstruktion bevorzugt von einer Innenwand begrenzt. Die Innenwand ist hierzu an der Dachkonstruktion auf ihrer dem Innenraum zugewandten Seite angeordnet und/oder befestigt. Beispielsweise ist das Gebäudeverschlusselement über ein Innenfutter an die Innenwand angebunden.

Das Gebäudeverschlusselement ist bevorzugt als Tür oder als Fenster ausgestaltet. Das Fenster kann hierbei ein Dachfenster beziehungsweise Dachflächenfenster, insbesondere ein Wohndachfenster beziehungsweise ein Wohndachflächenfenster oder ein Oberlicht, oder alternativ ein Fassadenfenster sein. Alternativ kann das Gebäudeverschlusselement ein Rollladen beziehungsweise eine Verschattungseinrichtung sein. Das Gebäudeverschlusselement kann zum lichtdurchlässigen oder lichtundurchlässigen Verschließen der Ausnehmung ausgestaltet sein. Ist das Gebäudeverschlusselement lichtdurchlässig, so verfügt es insbesondere über eine Verglasung, welche beispielsweise als Einfachverglasung oder als Mehrfachverglasung, insbesondere als Doppelverglasung oder als Dreifachverglasung, vorliegt.

Das Gebäudeverschlusselement weist vorzugsweise einen oder mehrere Rahmen auf. Der Rahmen beziehungsweise jeder der Rahmen verfügt über mehrere Rahmenholme. Die Rahmenholme sind aneinander befestigt, nämlich derart, dass sie einen Bereich des Gebäudeverschlusselements zwischen sich aufnehmen. Die Rahmenholme bilden insoweit einen geschlossenen Rahmen. Der Rahmen beziehungsweise die mehreren Rahmenholme sind insbesondere derart ausgestaltet, dass sie die Ausnehmung der Gebäudehülle übergreifen und/oder abdecken. Vorzugsweise sind die Rahmenholme derart angeordnet und ausgestaltet, dass sie gemeinsam mit der Verglasung die Ausnehmung zumindest zeitweise vollständig verschließen. Hierzu wird die Verglasung bevorzugt von dem Rahmen getragen. Beispielsweise ist sie hierbei von den mehreren Rahmenholmen eingefasst.

Das Gebäudeverschlusselement kann permanent geschlossen sein, also zum permanenten Verschließen der Ausnehmung ausgestaltet sein. In diesem Fall verfügt es beispielsweise über lediglich einen einzigen Rahmen, welcher starr mit der Gebäudehülle verbunden ist. Es kann jedoch auch vorgesehen sein, dass das Gebäudeverschlusselement geöffnet und geschlossen werden kann. In diesem Fall weist es vorzugsweise mehrere Rahmen auf, wobei einer der Rahmen als Blendrahmen und ein anderer der Rahmen als Flügelrahmen ausgestaltet ist. Der Flügelrahmen ist bezüglich des Blendrahmens verlagerbar, insbesondere verschwenkbar. Liegt der Flügelrahmen vor, so ist die Verglasung bevorzugt an diesem befestigt und wird lediglich mittelbar über den Flügelrahmen von dem Blendrahmen getragen. Entsprechend ist die Verglasung gemeinsam mit dem Flügelrahmen bezüglich des Blendrahmens verlagerbar beziehungsweise verschwenkbar.

Für mehrere, vorzugsweise jedes, der Gebäudeverschlusselemente des Netzwerks wird in der Zentralrecheneinrichtung ein Gebäudeverschlussdatensatz angelegt. Dies erfolgt beispielsweise bei oder unmittelbar nach der Herstellung des Gebäudeverschlusselements. Der Gebäudeverschlussdatensatz kann jedoch selbstverständlich auch später noch angelegt werden, beispielsweise nach einer Montage des Gebäudeverschlusses. Für mehrere beziehungsweise jedes der Gebäudeverschlusselemente liegt genau ein Gebäudeverschlussdatensatz in der Zentralrecheneinrichtung vor. Umgekehrt ist jeder der in der Zentralrecheneinrichtung abgespeicherten Gebäudeverschlussdatensätze genau einem der Gebäudeverschlusselemente zugeordnet. Der Gebäudeverschlussdatensatz stellt einen digitalen Zwilling des Gebäudeverschlusselements oder zumindest einen einem solchen digitalen Zwilling zugrunde liegenden Datensatz dar. Der Gebäudeverschlussdatensatz reflektiert insoweit einen momentanen Zustand des Gebäudeverschlusselements, sodass sich aus dem Gebäudeverschlussdatensatz bestimmte Parameter ableiten lassen.

Jedes der Gebäudeverschlusselemente verfügt über eine Sensoranordnung mit wenigstens einem Zustandsgrößensensor. Mithilfe des Zustandsgrößensensor wird zumindest zeitweise die Zustandsgröße des Gebäudeverschlusselements erfasst, insbesondere gemessen, genauer gesagt der Wert der Zustandsgröße. Es kann vorgesehen sein, dass die Sensoranordnung lediglich einen einzigen Zustandsgrößensensor zur Erfassung des Werts lediglich einer einzigen Zustandsgröße aufweist. Es kann jedoch auch vorgesehen sein, dass mittels des Zustandsgrößensensors Werte für mehrere unterschiedliche Zustandsgrößen erfasst werden, oder dass mehrere Zustandsgrößensensoren vorliegen, mittels welchen die Werte für mehrere unterschiedliche Zustandsgrößen erfassbar sind. Sofern also im Rahmen dieser Beschreibung von der Zustandsgröße gesprochen wird, so ist darunter stets zu verstehen, dass entweder genau eine einzige Zustandsgröße oder alternativ mehrere Zustandsgrößen vorliegen, für welche mithilfe des wenigstens einen Zustandsgrößensensors der Wert beziehungsweise die Werte ermittelt und an die Zentralrecheneinrichtung übermittelt werden.

Allgemeiner ausgedrückt verfügt die Sensoranordnung des Gebäudeverschlusselements über einen oder mehrere Zustandsgrößensensoren, mittels welchen Werte von einer oder mehreren Zustandsgrößen zumindest zeitweise erfasst beziehungsweise gemessen werden. Unter der Zustandsgröße ist eine das Gebäudeverschlusselement betreffende Größe beziehungsweise eine einen Zustand des Gebäudeverschlusselements beschreibende Größe zu verstehen. Beispielsweise erfasst der Zustandsgrößensensor die Zustandsgröße beziehungsweise ihren Wert unmittelbar an dem Gebäudeverschlusselement oder in einer unmittelbaren Umgebung des Gebäudeverschlusselements, beispielsweise in der Außenumgebung und/oder in dem Innenraum.

Der mithilfe des Zustandsgrößensensors ermittelte Wert der Zustandsgröße wird über die Datenübertragungsverbindung an die Zentralrecheneinrichtung übermittelt. Bevorzugt erfasst das Gebäudeverschlusselement nicht nur den Wert einer Zustandsgröße, sondern die Werte mehrerer Zustandsgrößen und übermittelt diese mehreren Werte an die Zentralrecheneinrichtung. Die an die Zentralrecheneinrichtung übermittelten Werte der Zustandsgröße oder der mehreren Zustandsgrößen werden in der Zentralrecheneinrichtung demjenigen Gebäudeverschlussdatensatz zugeordnet, welcher dem Gebäudeverschlusselement zugehörig ist, von welcher der Wert der Zustandsgröße übermittelt wurde.

In dem dem Gebäudeverschlusselement zugeordneten Gebäudeverschlussdatensatz wird der Wert der Zustandsgröße dem Zustandsgrößenverlauf zugeordnet, also der Zustandsgrößenverlauf um diesen Wert ergänzt. Der Zustandsgrößenverlauf beschreibt insoweit den Verlauf der Zustandsgröße über der Zeit. Hierbei kann es vorgesehen sein, dass der Zustandsgrößenverlauf eine im wesentlichen unbegrenzte Datengröße aufweist, dass also eine beliebige Anzahl an Werten der Zustandsgröße in ihm hinterlegt werden. Hierzu ist hinreichend Speicherplatz vorzuhalten. Es kann jedoch auch vorgesehen sein, insbesondere aus Speicherplatzgründen, dass lediglich eine bestimmte Anzahl an Werten in dem Zustandsgrößenverlauf abgespeichert werden. In diesem Fall wird beispielsweise der jeweils älteste Wert der Zustandsgröße aus dem Zustandsgrößenverlauf entfernt, sobald die Zustandsgröße an die Zentralrecheneinrichtung übermittelt und ihr Wert dem Zustandsgrößenverlauf zugeschlagen wird.

Die Zentralrecheneinrichtung ermittelt auf Grundlage einer oder mehrerer Größen die Information beziehungsweise die Handlungsempfehlung für das wenigstens eine Gebäudeverschlusselement. Hierzu wird mindestens die Zustandsgröße und/oder der Zustandsgrößenverlauf herangezogen. Beispielsweise wird also die Information beziehungsweise die Handlungsempfehlung allein aus der Zustandsgröße oder allein aus dem Zustandsgrößenverlauf ermittelt. Vorzugsweise finden jedoch sowohl die Zustandsgröße als auch der Zustandsgrößenverlauf Verwendung. Von Bedeutung ist vor allem, dass das Bestimmen der Information beziehungsweise der Handlungsempfehlung zentral vorgenommen wird, nämlich in der Zentralrecheneinrichtung, in welche für alle Gebäudeverschlusselemente die Gebäudeverschlussdatensätze hinterlegt sind. Selbstverständlich ist es bevorzugt vorgesehen, die Information beziehungsweise Handlungsempfehlung für mehrere der Gebäudeverschlusselemente oder sogar für alle Gebäudeverschlusselemente zu ermitteln und an das jeweilige Gebäudeverschlusselement zu übermitteln.

Vorzugsweise findet bei dem Ermitteln der Information beziehungsweise der Handlungsempfehlung nicht nur der Gebäudeverschlussdatensatz desjenigen Gebäudeverschlusselements Verwendung, für welchen das Ermitteln vorgenommen wird, sondern bevorzugt werden auch der Gebäudeverschlussdatensatz wenigstens eines anderen der Gebäudeverschlusselemente oder die Gebäudeverschlussdatensätze mehrerer oder sogar aller anderen Gebäudeverschlusselemente herangezogen. Hierdurch ist ein Big Data-Ansatz für die Ermittlung der Information beziehungsweise der Handlungsempfehlung realisiert, sodass eine besonders große Datenbasis Verwendung findet. Dies ermöglicht ein Ermitteln der Information beziehungsweise der Handlungsempfehlung auf äußerst fundierter Basis möglich, insbesondere ohne dass notwendigerweise bereits eine Datenbasis für das jeweilige Gebäudeverschlusselement geschaffen wurde.

Nach dem zentralen Bestimmen der Information beziehungsweise der Handlungsempfehlung durch die Zentralrecheneinrichtung wird sie an die Anzeigevorrichtung beziehungsweise das Gebäudeverschlusselement übermittelt beziehungsweise übertragen, nämlich über die Datenübertragungsverbindung. Die Datenübertragungsverbindung ist insoweit bevorzugt bidirektional. Unter der Information ist vorzugsweise eine Aussage über den Zustand des jeweiligen Gebäudeverschlusselements zu verstehen, beispielsweise dessen Wartungszustand oder eine Benutzungshäufigkeit beziehungsweise Benutzungsintensität. Unter der Handlungsempfehlung ist hingegen eine Aufforderung zur Vornahme einer Handlung an dem Gebäudeverschlusselement zu verstehen. Insbesondere ist hiermit eine Empfehlung zum Öffnen oder Schließen des Gebäudeverschlusselements oder zur Anforderung einer Wartung gemeint.

Die Anzeigevorrichtung dient dem Anzeigen der Information beziehungsweise der Handlungsempfehlung, insbesondere also dem optischen Darstellen derselben. Die Anzeigevorrichtung kann an dem Gebäudeverschlusselement vorliegen beziehungsweise Bestandteil des Gebäudeverschlusselements sein. Sie kann jedoch auch separat von dem Gebäudeverschlusselement vorliegen und insbesondere als von dem Gebäudeverschlusselement verschiedenes Mobilgerät ausgestaltet sein. Es kann jedoch auch vorgesehen sein, dass die Information beziehungsweise die Handlungsempfehlung allein an das Gebäudeverschlusselement übermittelt wird, ohne diese anzuzeigen. Beispielsweise führt das Gebäudeverschlusselement bei einer solchen Vorgehensweise die von der Handlungsempfehlung empfohlene Handlung selbsttätig durch, beispielsweise mittels eines entsprechenden Aktuators.

Insgesamt ist es also vorgesehen, in der Zentralrecheneinrichtung einen digitalen Zwilling für mehrere oder jedes der Gebäudeverschlusselemente vorzuhalten. Dies hat den Vorteil, dass an zentraler Stelle eine Beurteilung des Zustands der Gebäudeverschlusselemente vorgenommen werden kann. Insbesondere ist es auf diese Art und Weise möglich, eine Wartung beziehungsweise eine Reparatur des Gebäudeverschlusselements zu veranlassen, sofern diese angesichts der Zustandsgröße und/oder des Zustandsgrößenverlaufs angezeigt erscheint. Ebenso kann es vorgesehen sein, alle Gebäudeverschlussdatensätze datensatzübergreifend auszuwerten, um so beispielsweise anhand bekannter Zustände mehrerer Gebäudeverschlusselemente auf den Zustand eines einzigen Gebäudeverschlusselement zu schließen. Auch dies ermöglicht eine zielgerichtete Überwachung der Gebäudeverschlusselemente.

Eine Weiterbildung der Erfindung sieht vor, dass in einer Trainingsbetriebsart der Zentralrecheneinrichtung ein Wert des Parameters erfasst und mittels der Zentralrecheneinrichtung mit der Zustandsgröße und/oder dem Zustandsgrößenverlauf korreliert wird und/oder in einer Überwachungsbetriebsart der Zentralrecheneinrichtung mittels der Zentralrecheneinrichtung aus der Zustandsgröße und/oder dem Zustandsgrößenverlauf der Wert des Parameters ermittelt wird. Die Trainingsbetriebsart dient einem Einlernen der Zentralrecheneinrichtung. Der Parameter ist grundsätzlich ein beliebiger, das Gebäudeverschlusselement beschreibender Parameter. Zum Beispiel wird ein Ansteuerungsparameter des Aktuators als Parameter verwendet.

Der Parameter beziehungsweise dessen Wert wird auf beliebige Art und Weise ermittelt, beispielsweise ist er Bestandteil des Gebäudeverschlussdatensatzes oder wird durch manuelle Eingabe erfasst. Die manuelle Eingabe kann unmittelbar an dem Gebäudeverschlusselement erfolgen, welches zu diesem Zweck eine entsprechende Eingabeeinrichtung aufweist. Vorzugsweise erfolgt das Eingeben des Parameters jedoch an der Zentralrecheneinrichtung oder dem Mobilgerät. Beispielsweise wird hierzu sowohl eine Kennung des Gebäudeverschlusselements als auch der Parameter beziehungsweise dessen Wert abgefragt und nachfolgend an die Zentralrecheneinrichtung übermittelt. Das Abfragen der Kennung kann das manuelle Eingeben der Kennung umfassen oder aber beispielsweise das Einscannen einer an dem Gebäudeverschlusselement angebrachten Markierung, insbesondere eines QR-Codes.

Die Zentralrecheneinrichtung korreliert den ermittelten Parameter beziehungsweise dessen Wert mit der Zustandsgröße und/oder dem Zustandsgrößenverlauf. Das Korrelieren erfolgt bevorzugt durch maschinelles Lernen und/oder das Durchführen einer Regressionsanalyse beziehungsweise einer Regression. Im Rahmen der Regression dient der Parameter beziehungsweise dessen Wert als Regressand und die Zustandsgröße beziehungsweise der Zustandsgrößenverlauf als Regressor. Als Regression wird beispielsweise eine lineare Regression verwendet. Im Rahmen des Korrelierens wird also, beispielsweise mittels der Regression, der Wert des Parameters in Beziehung zu der Zustandsgröße beziehungsweise dem Zustandsgrößenverlauf gesetzt. Hieraus ergibt sich während der Trainingsbetriebsart eine Korrelation, die nachfolgend genutzt werden kann, um aus der Zustandsgröße beziehungsweise dem Zustandsgrößenverlauf auf den Wert des Parameters zu schließen. Die Regression wird vorzugsweise mittels eines neuronalen Netzwerks vorgenommen. Grundsätzlich kann hierbei Deep Learning Verwendung finden, um besonders aussagekräftige Ergebnisse zu erzielen.

Es kann vorgesehen sein, in der Trainingsbetriebsart für jeden der Gebäudeverschlussdatensätze eine separate Korrelation zu bestimmen und diese in dem jeweiligen Gebäudeverschlussdatensatz abzulegen. Bevorzugt werden jedoch die Werte der Zustandsgröße und/oder die Zustandsgrößenverläufe und/oder die Werte des Parameters zumindest mehrerer Gebäudeverschlussdatensätze oder sogar aller Gebäudeverschlussdatensätze herangezogen, um die Korrelation zu ermitteln. Die Korrelation ergibt sich insoweit aus mehreren oder allen Gebäudeverschlussdatensätzen. Vorzugsweise ist es vorgesehen, die Korrelation jeweils unter Verwendung des Werts des Parameters und dem Wert der Zustandsgröße und/oder dem Zustandsgrößenverlauf desjenigen Gebäudeverschlussdatensatzes zu verbessern, für welchen der Wert des Parameters ermittelt beziehungsweise erfasst wurde.

Vorzugsweise wird für unterschiedliche Parameter jeweils eine separate Korrelation ermittelt und hinterlegt. Es kann vorgesehen sein, dass nicht lediglich ein einziger Parameter ausgewertet werden soll, sondern stattdessen mehrere Parameter. In diesem Fall ist bevorzugt jedem der Parameter eine separate Korrelation zugeordnet, welche in der Trainingsbetriebsart ermittelt beziehungsweis verbessert und in der Überwachungsbetriebsart zum Bestimmen beziehungsweise Abschätzen des Werts des Parameters herangezogen wird. Hierdurch ist die Überwachung mehrerer unterschiedlicher Parameter mit hoher Zuverlässigkeit möglich.

Zusätzlich oder alternativ zu der Trainingsbetriebsart kann die Zentralrecheneinrichtung in der Überwachungsbetriebsart betrieben werden. Vorzugsweise ist es vorgesehen, die Zentralrecheneinrichtung zunächst in der Trainingsbetriebsart zu trainieren und sie anschließend in der Überwachungsbetriebsart zu betreiben oder sie in Abhängigkeit der bei ihr eingehenden Daten entweder in der Trainingsbetriebsart oder der Überwachungsbetriebsart zu betreiben. Insbesondere ist es vorgesehen, die Trainingsbetriebsart durchzuführen, falls der Parameter beziehungsweise dessen Wert erfasst und an die Zentralrecheneinrichtung übermittelt wird. Wird hingegen die Zustandsgröße beziehungsweise ihr Wert erfasst und an die Zentralrecheneinrichtung übermittelt, so wird die Überwachungsbetriebsart durchgeführt. So wird die Zustandsgröße beziehungsweise der Zustandsgrößenverlauf sowie der übermittelte Parameter beziehungsweise dessen Wert zur Verbesserung der Korrelation verwendet.

In der Überwachungsbetriebsart ermittelt die Zentralrecheneinrichtung aus der Zustandsgröße beziehungsweise dem Zustandsgrößenverlauf den Wert des Parameters, nämlich unter Verwendung der Korrelation. Hierdurch ist es möglich, anhand der Zustandsgröße beziehungsweise deren Verlauf unmittelbar den Wert des Parameters abzuschätzen, ohne dass diese ermittelt und manuell eingegeben werden muss. Für das Ermitteln des Werts des Parameters wird die Korrelation verwendet sowie der Wert der Zustandsgröße und/oder der Zustandsgrößenverlauf desjenigen Gebäudeverschlussdatensatzes, für welchen die Zustandsgröße erfasst und übermittelt wurde. Schlussendlich ist somit vorgesehen, dass die Information und/oder die Handlungsempfehlung in Abhängigkeit von dem Wert des Parameters bestimmt werden. Hierdurch ist das Bestimmen der Information und/oder der Handlungsempfehlung für das Gebäudeverschlusselement auf einer großen Datenbasis und mithin sehr zuverlässig und genau möglich.

Die Information beziehungsweise die Handlungsempfehlung kann selbstverständlich auch für ein Gebäudeverschlusselement übermittelt werden, welches nicht demjenigen Gebäudeverschlusselement entspricht, für welches der digitale Zwilling hinterlegt ist, sondern für ein baugleiches Gebäudeverschlusselement, welches bevorzugt in demselben Gebäude verbaut ist wie das Gebäudeverschlusselement mit dem digitalen Zwilling. Zumindest sollte das Gebäudeverschlusselement das gleiche Alter aufweisen wie das Gebäudeverschlusselement mit dem digitalen Zwilling. Zwischen den beiden Gebäudeverschlusselementen liegt eine hinreichend ausgeprägte Ähnlichkeit vor, dass die Information beziehungsweise die Handlungsempfehlung zwischen ihnen übertragbar ist.

Eine Weiterbildung der Erfindung sieht vor, dass der Wert des Parameters zumindest zeitweise erfasst und an die Zentralrecheneinrichtung übermittelt wird, wobei bei dem Erfassen die Trainingsbetriebsart vorgenommen wird, vorzugsweise bei jedem Erfassen, und/oder dass nach dem Übermitteln des Werts der Zustandsgröße an die Zentralrecheneinrichtung die Überwachungsbetriebsart durchgeführt wird, vorzugsweise nach jedem Übermitteln. Auf das Erfassen des Parameterwerts und sein Übermitteln an die Zentralrecheneinheit wurde bereits hingewiesen. Ebenfalls wurde bereits erläutert, dass die Korrelation bei dem Übermitteln des Parameterwerts ermittelt und hierdurch verbessert wird, nämlich durch Vornahme der Trainingsbetriebsart. Umgekehrt wird der Parameterwert anhand der Korrelation ermittelt, sofern der Wert der Zustandsgröße an die Zentralrecheneinrichtung übermittelt und dem Gebäudeverschlussdatensatz zugeordnet wird, nämlich im Rahmen der Überwachungsbetriebsart. Hierdurch werden eine hohe Datenqualität und entsprechend eine hohe Genauigkeit der Information beziehungsweise der Handlungsempfehlung erzielt.

Eine Weiterbildung der Erfindung sieht vor, dass aus den Gebäudeverschlussdatensätzen für diejenigen Gebäudeverschlusselemente, die einen ersten Wert des Parameters aufweisen, anhand der Zustandsgröße und/oder des Zustandsgrößenverlaufs ein diese einfassender Wertebereich ermittelt wird, und aus den Gebäudedatensätzen für diejenigen Gebäudeverschlusselemente, die einen von dem ersten Wert verschiedenen zweiten Wert des Parameters aufweisen, solche ermittelt werden, für welche die Zustandsgröße und/oder der Zustandsgrößenverlauf in dem Wertebereich liegen, wobei die Information und/oder Handlungsempfehlung für diese Gebäudeverschlusselemente eine Änderung des Parameters von dem zweiten Wert auf den ersten Wert beschreibt.

Insoweit ist es vorgesehen, die Gebäudeverschlusselemente in unterschiedliche Gruppen aufzuteilen, nämlich anhand des Parameters. Gebäudeverschlusselement, welche den ersten Wert des Parameters aufweisen, werden einer ersten Gruppe zugeordnet und Gebäudeverschlusselemente, die einen zweiten Wert des Parameters aufweisen, einer zweiten Gruppe. Vorzugsweise werden hierbei so viele Gruppen gebildet wie unterschiedliche Werte des Parameters vorliegen, sodass grundsätzlich auch eine dritte Gruppe, eine vierte Gruppe und so weiter vorliegen können. Für die erste Gruppe der Gebäudeverschlusselemente wird ein Wertebereich ermittelt, welcher die Zustandsgröße und/oder dem Zustandsgrößenverlauf für diese Gruppe einfasst, insbesondere gerade einfasst. Der Wertebereich erstreckt sich also von einem in der ersten Gruppe der Gebäudeverschlusselemente auftretenden minimalen Wert der Zustandsgröße beziehungsweise des Zustandsgrößenverlaufs bis hin zu einer in der ersten Gruppe der Gebäudeverschlusselemente auftretenden maximalen Wert der Zustandsgröße beziehungsweise des Zustandsgrößenverlaufs.

Anschließend werden diejenigen Gebäudeverschlusselemente ermittelt, die Teil der zweiten Gruppe sind und für welche die Zustandsgröße beziehungsweise der Zustandsgrößenverlauf in dem Wertebereich der ersten Gruppe liegt. Existieren solche Gebäudeverschlusselemente, so wird diesen mit der Information beziehungsweise Handlungsempfehlung die Änderung des Parameters von dem zweiten Wert auf den ersten Wert empfohlen. Eine solche Vorgehensweise ermöglicht es, einer Minderheit der Gebäudeverschlusselemente den Parameter einer Mehrheit der Gebäudeverschlusselemente zu empfehlen, falls für sie ähnliche Zustandsgrößen beziehungsweise Zustandsgrößenverläufe vorliegen.

Eine Weiterbildung der Erfindung sieht vor, dass für mehrere, insbesondere jedes, der Gebäudeverschlusselemente zumindest ein bei einer Herstellung des jeweiligen Gebäudeverschlusselements festgelegter Gebäudeverschlussparameter in einem in der Zentralrecheneinrichtung abgespeicherten Gebäudeverschlussdatensatz abgespeichert wird. Der Gebäudeverschlussparameter ist ein das jeweilige Gebäudeverschlusselement beschreibender Parameter, insbesondere beschreibt der Gebäudeverschlussparameter also eine Eigenschaft des Gebäudeverschlusselements. Beispielsweise betrifft der Gebäudeverschlussparameter eine Größe des Gebäudeverschlusselements, die Verglasung des Gebäudeverschlusselements (sofern vorhanden) oder eine Ausstattung des Gebäudeverschlus selements.

Unter der Ausstattung ist beispielsweise eines der folgenden Elemente zu verstehen: Verschattungseinrichtung beziehungsweise Sonnenschutz des Gebäudeverschlusselements, Aktuator zum Öffnen und Schließen des Gebäudeverschlusselements, Aktuator zum eines Verschattungsgrads mittels der Verschattungseinrichtung und dergleichen. Der Gebäudeverschlussparameter beschreibt insoweit, ob die jeweilige Ausstattung vorliegt oder nicht. In jedem der Gebäudeverschlussdatensätze ist zumindest eine solcher Gebäudeverschlussparameter abgelegt. Selbstverständlich kann es vorgesehen sein, für mehrere oder jedes der Gebäudeverschlusselemente mehrere Gebäudeverschlussparameter in dem Gebäudeverschlussdatensatz zu hinterlegen, beispielsweise mehrere der vorstehend beschriebenen Gebäudeverschlussparameter. Somit sind der Zentralrecheneinrichtung die Eigenschaften des Gebäudeverschlusselements, insbesondere seine Ausstattung, wohlbekannt.

Der Unterschied zwischen der Zustandsgröße und dem Gebäudeverschlussparameter liegt insbesondere darin, dass die Zustandsgröße sich über der Zeit verändert und insbesondere von äußeren Einflüssen aus der Außenumgebung auf das Gebäudeverschlusselement abhängt. Der Gebäudeverschlussparameter ist hingegen ein festgelegter Parameter, welcher über der Zeit vollständig oder zumindest weitgehend konstant ist. Selbstverständlich kann es jedoch vorgesehen sein, den Gebäudeverschlussparameter zu ändern, insbesondere manuell zu ändern, beispielsweise bei einer Änderung der Ausstattung des Gebäudeverschlusselements. Bei einer solchen Änderung wird der neue beziehungsweise geänderte Gebäudeverschlussparameter in dem Gebäudeverschlussdatensatz abgespeichert, nämlich unter Überschreiben des bisherigen Gebäudeverschlussparameters.

Eine Weiterbildung der Erfindung sieht vor, dass das Ermitteln und Übertragen der Zustandsgröße ab der Herstellung des jeweiligen Gebäudeverschlusselements oder ab einem Ende eines Transport- und/oder Montagevorgangs des jeweiligen Gebäudeverschlusselements vorgenommen wird. Bevorzugt ist der Zustandsgrößensensor beziehungsweise die Sensoranordnung integraler Bestandteil des Gebäudeverschlusselements. Das bedeutet, dass der Zustandsgrößensensor beziehungsweise die Sensoranordnung bereits bei der Herstellung des Gebäudeverschlusselements dem Gebäudeverschlusselement zugeordnet wird. Insbesondere wird die Sensoranordnung dauerhaft an dem Gebäudeverschlusselement befestigt, vorzugsweise an dem Rahmen beziehungsweise einem der Rahmen.

Es erfolgt also keine lediglich temporäre Befestigung des Zustandsgrößensensors beziehungsweise der Sensoranordnung an dem Gebäudeverschlusselement. Die Befestigung kann dabei bevorzugt derart erfolgen, dass die Sensoranordnung nicht oder zumindest nicht beschädigungsfrei von dem Gebäudeverschlusselement getrennt werden kann. Beispielsweise ist die Sensoranordnung in einer in dem Gebäudeverschlusselement ausgebildeten Ausnehmung angeordnet, sodass sie aus der Außenumgebung nicht oder lediglich teilweise sichtbar ist. Bevorzugt wird die Ausnehmung nach der Anordnung der Sensoranordnung in ihr verschlossen, sodass die Sensoranordnung den optischen Eindruck des Gebäudeverschlusselements nicht beeinflusst.

Nach der Herstellung des Gebäudeverschlusselements erfolgt der Transport- und/oder Montagevorgang. Der Transportvorgang umfasst hierbei insbesondere einen Transport des Gebäudeverschlusselement von einem Werk, in welchem das Gebäudeverschlusselement hergestellt wird, bis hin zu einem Montageort des Gebäudeverschlusselements, an welchem das Gebäudeverschlusselement montiert wird, also der Montagevorgang vorgenommen wird. Der Montageort entspricht bevorzugt einem Standort des Gebäudes. Es kann jedoch auch vorgesehen sein, dass der Transportvorgang erst später beginnt, beispielsweise bei einem Zwischenhändler, zu welchem das Gebäudeverschlusselement ausgehend von dem Werk verbracht wird. Der Transportvorgang umfasst in diesem Fall den Transport des Gebäudeverschlusselements von dem Zwischenhändler bis zu dem Montageort.

Der Montagevorgang des Gebäudeverschlusselements wird an dem Montageort vorgenommen. Unter dem Montagevorgang ist insbesondere ein Vorgang ab einem Entfernen einer das Gebäudeverschlusselement zumindest teilweise einschließenden Verpackung bis hin zu einer endgültigen Anordnung des Gebäudeverschlusselements in der Ausnehmung der Gebäudehülle zu verstehen. Der Montagevorgang beginnt insoweit mit dem Entfernen der Verpackung, beispielsweise mit einem Beginn des Entfernens der Verpackung oder unmittelbar nach dem vollständigen Entfernen der Verpackung. Er endet, sobald das Gebäudeverschlusselement in der Ausnehmung der Gebäudehülle angeordnet und dort befestigt ist.

Beispielsweise wird das Ende des Montagevorgangs dem Gebäudeverschlusselement und/oder der Zentralrecheneinrichtung durch eine Eingabe mitgeteilt. Insbesondere weist hierzu das Gebäudeverschlusselement beziehungsweise die Zentralrecheneinrichtung eine entsprechende Eingabeeinrichtung auf. Die Eingabeeinrichtung kann eine physische Einrichtung sein, beispielsweise ein Knopf, ein Schalter oder dergleichen. Sie kann jedoch auch an einem Mobilgerät vorliegen, welches über eine Datenübertragungsverbindung mit dem Gebäudeverschlusselement und/oder der Zentralrecheneinrichtung in Verbindung steht.

In diesem Fall ist es beispielsweise vorgesehen, dass der die Montage des Gebäudeverschlusselements vornehmende Monteur eine Kennung des Gebäudeverschlusselements mit dem Mobilgerät erfasst, beispielsweise durch manuelle Eingabe eines Codes oder durch Einscannen eines an dem Gebäudeverschlusselement befindlichen QR-Codes. Das Mobilgerät übermittelt nachfolgend dem Gebäudeverschlusselement und/oder der Zentralrecheneinrichtung das Ende des Montagevorgangs.

Vorzugsweise liegt hierbei eine unmittelbare Datenübertragungsverbindung zwischen dem Mobilgerät und der Zentralrecheneinrichtung vor. Die Datenübertragungsverbindung zwischen dem Mobilgerät und dem Gebäudeverschlusselement kann ebenfalls unmittelbar ausgestaltet sein. Alternativ liegt sie lediglich mittelbar über die Zentralrecheneinrichtung vor. Die Zentralrecheneinrichtung steht also sowohl mit dem Mobilgerät als auch mit dem Gebäudeverschlusselement in Datenübertragungsverbindung. Die Datenübertragungsverbindung ist in jedem Fall bevorzugt drahtlos.

Das Gebäudeverschlusselement ist in einer ersten Ausführungsform dazu vorgesehen und ausgestaltet, das Ermitteln und Übertragen der Zustandsgröße bereits ab der Herstellung des Gebäudeverschlusselements vorzunehmen. Das bedeutet, dass das Ermitteln und Übertragen der Zustandsgröße bereits während des Transport- und/oder Montagevorgangs folgt, sodass eine Überwachung desselben erfolgen kann. Hierdurch ist eine effektive Qualitätskontrolle realisiert. In einer zweiten Ausführungsform beginnt das Ermitteln und Übertragen der Zustandsgröße erst ab dem Ende des Transport- und/oder Montagevorgangs des Gebäudeverschlusselements, also erst nach dem das Gebäudeverschlusselement bereits an beziehungsweise in dem Gebäude montiert ist. Dies ermöglicht eine effektive Überwachung seines Betriebs.

Eine Weiterbildung der Erfindung sieht vor, dass als Parameter eine Transport- und/oder Montagequalität verwendet wird und das Erfassen des Parameters nach dem Transport- und/oder Montagevorgang erfolgt. Vorzugsweise am Ende des Transport- und/oder Montagevorgangs oder nach diesem wird die Transport- und/oder Montagequalität erfasst. Dies geschieht insbesondere durch eine manuelle Eingabe derselben. Beispielsweise gibt der Monteur und/oder ein die Transport- und/oder Montagequalität überprüfender Kontrolleur die Transport- und/oder Montagequalität manuell ein. Auf die Möglichkeiten beim Eingeben des Parameters wurde bereits eingegangen. Nach dem Übermitteln der Transport- und/oder Montagequalität an die Zentralrecheneinrichtung wird aus der Transport- und/oder Montagequalität einerseits und dem Wert der Zustandsgröße und/oder dem Zustandsgrößenverlauf andererseits die Korrelation ermittelt.

Soll die Transport- und/oder Montagequalität nicht erfasst werden, so werden stattdessen der Wert der Zustandsgröße und/oder dem Zustandsgrößenverlauf an die Zentralrecheneinrichtung übermittelt und anhand der dort bereits vorliegenden Korrelation die Transport- und/oder Montagequalität abgeschätzt. Beispielsweise ist es vorgesehen, die Transport- und/oder Montagequalität zu ermitteln und mit einem Grenzwert zu vergleichen. Wird dieser von der Transport- und/oder Montagequalität unterschritten, so wird ein Fehler angezeigt beziehungsweise ein den Fehler signalisierendes Signal ausgegeben.

Beispielsweise wird hierauf eine Kontrolle des Gebäudeverschlusselements vorgenommen und eventuell aufgefundene Transport- und/oder Montagefehler beziehungsweise -schäden beseitigt. Ist die Transport- und/oder Montagequalität hingegen größer als der Grenzwert, so wird entweder auf das Ausgeben eines Signals verzichtet oder aber ein Signal ausgegeben, welches einen einwandfreien Zustand des Gebäudeverschlusselements signalisiert. Die beschriebene Vorgehensweise ermöglicht eine besonders einfache und zuverlässige Qualitätsüberwachung des Transport- und/oder Montagevorgangs.

Eine Weiterbildung der Erfindung sieht vor, dass als Parameter eine Wartungsinformation verwendet wird und das Erfassen des Parameters im Falle einer Wartung des Gebäudeverschlusselements erfolgt. Die Wartungsinformation beschreibt insbesondere den Zustand des Gebäudeverschlusselements. Im einfachsten Fall beschreibt die Wartungsinformation, ob eine Wartung notwendig ist oder nicht. Die Wartungsinformation wird bei der Durchführung der Wartung des Gebäudeverschlusselements erfasst, welche beispielsweise auf Aufforderung eines Benutzers des Gebäudeverschlusselements vorgenommen wird. In diesem Zuge kann der die Wartung vornehmende Servicetechniker den Zustand des Gebäudeverschlusselements beurteilen und in Form der Wartungsinformation der Zentralrecheneinrichtung bereitstellen.

In der Trainingsbetriebsart wird die erfasste Wartungsinformation mit der Zustandsgröße und/oder dem Zustandsgrößenverlauf korreliert, sodass sich wiederum die Korrelation ergibt. Es kann vorgesehen sein, dass die Zentralrecheneinrichtung lediglich eine Korrelation für die Transport- und/oder Montagequalität oder eine Korrelation für die Wartungsinformation ermittelt. Besonders bevorzugt ermittelt die Zentralrecheneinrichtung sowohl die Korrelation für die Transport- und/oder Montagequalität als auch die Korrelation für die Wartungsinformation.

Zusätzlich oder alternativ zu der Trainingsbetriebsart für die Wartungsinformation kann die Zentralrecheneinrichtung in der Überwachungsbetriebsart für die Wartungsinformation betrieben werden. Bevorzugt ist es vorgesehen, den Wert der Wartungsinformation aus der Zustandsgröße und/oder dem Zustandsgrößenverlauf mithilfe der entsprechenden Korrelation zu ermitteln. Entspricht dieser Wert einem ersten Wert oder liegt in einem ersten Bereich, so wird davon ausgegangen, dass das Gebäudeverschlusselement keine Wartung benötigt. Entspricht hingegen der Wert einem von dem ersten Wert verschiedenen zweiten Wert oder liegt in einem von dem ersten Bereich verschiedenen zweiten Bereich, so wird angenommen, dass eine Wartung durchgeführt werden muss. In letzterem Fall wird beispielsweise ein Servicetechniker mit der Wartung betraut. Hierdurch ist eine vorausschauende Erkennung auf mögliche Defekte des Gebäudeverschlusselements realisiert.

Eine Weiterbildung der Erfindung sieht vor, dass zumindest eines der Gebäudeverschlusselemente einen Aktuator aufweist und ein Ansteuerungsparameter für den Aktuator zumindest zeitweise in Abhängigkeit von einer Einstellung eines Bedienelements des Gebäudeverschlusselements ermittelt wird, wobei der Aktuator in Abhängigkeit von dem Ansteuerungsparameter angesteuert und der Ansteuerungsparameter über die Datenübertragungsverbindung an die Zentralrecheneinrichtung übermittelt und in dem dem Gebäudeverschlusselement zugeordneten Gebäudeverschlussdatensatz abgespeichert wird. Der Aktuator stellt einen Antrieb für eine beliebige Einrichtung des Gebäudeverschlusselements dar. Beispielsweise dient der Aktuator dem Öffnen und Schließen des Gebäudeverschlusselements. Er kann jedoch auch zum Einstellen eines Verschattungsgrads mittels einer Verschattungseinrichtung des Gebäudeverschlusselements herangezogen werden.

Der Ansteuerungsparameter des Gebäudeverschlusselements wird zumindest zeitweise in Abhängigkeit von der Einstellung des Bedienelements ermittelt und der Aktuator in Abhängigkeit von dem Ansteuerungsparameter angesteuert. Das Gebäudeverschlusselement weist hierzu beispielsweise das Bedienelement auf, an welchem der Ansteuerungsparameter einstellbar ist. Zusätzlich oder alternativ dient das Mobilgerät als Bedienelement. Der Aktuator wird nach dem Ermitteln des Ansteuerungsparameters zumindest zeitweise in Abhängigkeit von diesem angesteuert, beispielsweise zum Öffnen oder Schließen des Gebäudeverschlusselement oder auf einen bestimmten Verschattungsgrad der Verschattungseinrichtung. Zusätzlich wird der Ansteuerungsparameter über die Datenverbindungseinrichtung an die Zentralrecheneinrichtung übermittelt und in dem dem Gebäudeverschlusselement zugeordneten Gebäudeverschlussdatensatz abgespeichert. Insbesondere wird der Ansteuerungsparameter als das Gebäudeverschlusselement beschreibender Parameter verwendet, sodass er eine Grundlage für die Information und/oder eine Handlungsempfehlung bildet.

Eine Weiterbildung der Erfindung sieht vor, dass als Parameter der Ansteuerungsparameter verwendet wird und der Aktuator zumindest zeitweise in Abhängigkeit von der Handlungsempfehlung angesteuert wird. Zum einen ist es also vorgesehen, dass der Ansteuerungsparameter zum Erstellen der Korrelation verwendet wird, nämlich zusammen mit der Zustandsgröße und/oder dem Zustandsgrößenverlauf.

Zum anderen kann es vorgesehen sein, dass der Ansteuerungsparameter zumindest zeitweise anhand der Zustandsgröße und/oder dem Zustandsgrößenverlauf einerseits sowie der Korrelation andererseits ermittelt wird. Werden also Gebäudeverschlusselemente durch ihre Benutzer bei Vorliegen eines bestimmten Werts der Zustandsgröße und/oder einem bestimmten Zustandsgrößenverlauf manuell bedient und ein bestimmter Wert des Ansteuerungsparameters vorgegeben, so wird die Korrelation angepasst und für ein anderes der Gebäudeverschlusselement, welches nicht durch einen Benutzer bedient wird, verwendet, um den Wert des Ansteuerungsparameters zu ermitteln.

Liegen für dieses Gebäudeverschlusselement der bestimmte Wert der Zustandsgröße und/oder der bestimmte Zustandsgrößenverlauf ebenfalls vor, so wird sich der gleiche Wert des Ansteuerungsparameters ergeben wie für die anderen Gebäudeverschlusselemente. Entsprechend wird der Aktuator dieses Gebäudeverschlusselements analog zu den Aktuatoren der anderen Gebäudeverschlusselemente angesteuert, ohne dass der Benutzer entsprechend eingreifen muss. Es ergibt sich also ein selbstlernendes System, das bereits vorausschauend auf mögliche Wünsche des Benutzers eingehen kann. Das bedeutet schlussendlich, dass die Zentralrecheneinrichtung das Gebäudeverschlusselement beziehungsweise seinen Aktuator fernsteuert. Hierdurch kann eine rasche Reaktion des Gebäudeverschlusselements beispielsweise auf veränderte Umgebungsbedingungen realisiert sein.

Sofern das Ansteuern des Aktuators sowohl in Abhängigkeit von der Handlungsempfehlung als auch von dem Ansteuerungsparameter jeweils zumindest zeitweise vorgesehen ist, so wird bevorzugt der Ansteuerungsparameter herangezogen. Widersprechen sich also die Handlungsempfehlung der Ansteuerungsparameter, so wird der Aktuator vorrangig in Abhängigkeit von dem Ansteuerungsparameter angesteuert und nicht in Abhängigkeit von der Handlungsempfehlung. Der ermittelte Ansteuerungsparameter beziehungsweise dessen Wert wird in jedem Fall an die Zentralrecheneinrichtung übermittelt und in dem entsprechenden Gebäudeverschlussdatensatz abgespeichert. Bevorzugt wird hierbei ein Verlauf des Ansteuerungsparameters über der Zeit in dem Gebäudeverschlussdatensatz abgelegt. Hierdurch ist eine genaue Auswertung des Verhaltens des Benutzers des Gebäudeverschlusselements realisierbar.

Eine Weiterbildung der Erfindung sieht vor, dass als Parameter einer der folgenden Parameter verwendet wird: der zumindest eine Gebäudeverschlussparameter, ein von einer von dem Gebäudeverschlusselement verschiedenen Datenquelle an die Zentralrecheneinrichtung übermittelter Lokalinformationsparameter und eine mittels einer Eingabeeinrichtung erfasste, den Komfort eines Benutzers des Gebäudeverschlusselements beschreibende Komfortgröße und eine Energieeffizienz des Gebäudeverschlusselements. Es kann vorgesehen sein, dass lediglich ein einziger der genannten Parameter verwendet wird. Bevorzugt finden jedoch mehrere oder alle der genannten Parameter Verwendung. Auf den Gebäudeverschlussparameter wurde vorstehend bereits hingewiesen. Dieser wird insbesondere bereits bei oder unmittelbar nach der Herstellung des Gebäudeverschlusselements in dem Gebäudeverschlussdatensatz hinterlegt.

Unter dem Lokalinformationsparameter ist ein Parameter zu verstehen, der eine lokal im Bereich des Gebäudeverschlusselements auftretende Größe beschreibt, welche die Umgebungsbedingungen des Gebäudeverschlusselements und damit das Gebäudeverschlusselement selbst betrifft. Insbesondere umfasst der Lokalinformationsparameter eine Information über die Umgebungstemperatur, eine Niederschlagsmenge, eine Niederschlagswahrscheinlichkeit oder dergleichen. Der Lokalinformationsparameter wird von der Datenquelle an die Zentralrecheneinrichtung übermittelt, wobei die Datenquelle von dem Gebäudeverschlusselement verschieden ist. Beispielsweise ist die Datenquelle eine weitere Zentralrecheneinrichtung. Die Zentralrecheneinrichtung wertet den Lokalinformationsparameter gemeinsam mit der Zustandsgröße beziehungsweise dem Zustandsgrößenverlauf aus und ermittelt hieraus die Information beziehungsweise die Handlungsempfehlung. Hierdurch wird beispielsweise die Umgebungstemperatur, die Niederschlagsmenge und/oder die Niederschlagswahrscheinlichkeit bei dem Ermitteln der Information beziehungsweise Handlungsempfehlung berücksichtigt, sodass eine zielgenaue Information des Benutzers beziehungsweise eine Ansteuerung des Gebäudeverschlusselement zielgerichtet erfolgt. Vorzugsweise findet der Lokalinformationsparameter als Parameter bei dem Ermitteln der Korrelation oder bei dem Ermitteln des Werts des Parameters mittels der Korrelation Verwendung.

Die Komfortgröße beschreibt den Komfort des Benutzers. Dieser kann die Komfortgröße anhand der Eingabeeinrichtung vorgeben. Vorzugsweise wird die Komfortgröße als Parameter bei dem Ermitteln oder Verwenden der Korrelation benutzt. Die Energieffizienz beschreibt insbesondere eine thermische Dämmwirkung des Gebäudeverschlusselements und/oder einen Energieeintrag in das Gebäude und/oder einen Energieverbrauch des Gebäudes, insbesondere einen Primärenergieverbrauch. Je höher die Dämmwirkung ist, umso größer ist die Energieffizienz. Auf dieser Grundlage kann eine Empfehlung für die Ausstattung des Gebäudeverschlusselements erstellt werden. Hierauf basierend können dann die Information und/oder die Handlungsempfehlung bestimmt werden.

Der Energieeintrag beschreibt vorzugsweise den Eintrag thermischer Energie durch das Gebäudeverschlusselement aus der Außenumgebung in das Gebäude, insbesondere durch Sonneneinstrahlung. Der Energieverbrauch ist zum Beispiel der Energieverbrauch einer Klimaanlage. Auf Grundlage eines dieser Parameter wird der Benutzer auf eine potentielle Energieeinsparungsmöglichkeit hingewiesen. So wird mittels der Information und/oder der Handlungsempfehlung beispielsweise der Benutzer aufgefordert, den Verschattungsgrad zu verändern, insbesondere zu erhöhen, oder das Gebäudeverschlusselement zu öffnen um den Energieverbrauch der Klimaanlage zu verringern beziehungsweise eine oder mehrere der genannten Maßnahmen mittels des Aktuators unmittelbar umgesetzt. Die beschriebenen Parameter ermöglichen eine deutliche Verbesserung eines Nutzwerts des Gebäudeverschlusselements für den Benutzer. Das Gebäudeverschlusselement reagiert nicht nur auf aktuelle Anforderungen des Benutzers, sondern es erfolgt vorzugsweise eine prädiktive Betriebsweise des Gebäudeverschlusselements, um Komfortnachteile des Benutzers vorausschauend zu vermeiden.

Eine Weiterbildung der Erfindung sieht vor, dass als der zumindest eine Gebäudeverschlussparameter ein Ausstattungsparameter verwendet wird, wobei der Ausstattungsparameter für ein erstes der Gebäudeverschlusselemente den ersten Wert und für ein zweites der Gebäudeverschlusselemente den zweiten Wert aufweist. Der erste Wert beschreibt beispielsweise, dass das Gebäudeverschlusselement nicht über eine bestimmte Ausstattung verfügt, wohingegen der zweite Wert anzeigt, dass eine solche Ausstattung bei dem Gebäudeverschlusselement vorhanden ist. Hierdurch ist eine Optimierung des Komforts des Benutzers durch Empfehlen einer bestimmten Ausstattung für das Gebäudeverschlusselement oder alternativ einer bestimmten Betriebsweise des Gebäudeverschlusselements unter Berücksichtigung der Ausstattung realisierbar.

Eine Weiterbildung der Erfindung sieht vor, dass der zumindest eine Gebäudeverschlussparameter über der Zeit angepasst wird. Beispielsweise liegt der Gebäudeverschlussparameter als Alter des Gebäudeverschlusselements oder dergleichen vor. Entsprechend wird er mit fortschreitender Zeit an das aktuelle Alter des Gebäudeverschlusselements angepasst. Hierdurch ist, insbesondere zusammen mit der der Wartungsinformation, eine Vorhersage einer notwendigen Wartung möglich, sodass bereits im Vorfeld auf einen drohenden Ausfall des Gebäudeverschlusselements durch Verschleiß reagiert werden kann. Zusätzlich oder alternativ zu dem Alter kann ein Gasfüllgrad der Verglasung mit einem Isoliergas, vorzugsweise Edelgas, herangezogen werden.

Eine Weiterbildung der Erfindung sieht vor, dass als Zustandsgrößensensor wenigstens einer der folgenden Sensoren verwendet wird: Beschleunigungssensor, Magnetfeldsensor, Positionssensor, Drehwinkelsensor, Geräuschsensor, Helligkeitssensor, Temperatursensor, Wärmeflusssensor, Staubsensor, Luftfeuchtigkeitssensor, VOC-Sensor, CO₂-Sensor, O₃-Sensor, Strömungsgeschwindigkeitssensor und Lidarsensor. Grundsätzlich kann lediglich ein einziger der genannten Sensoren vorliegen. Besonders bevorzugt verfügt das Gebäudeverschlusselement jedoch über mehrere Zustandsgrößensensoren, sodass entsprechend mehrere der genannten Sensoren vorliegen.

Der Beschleunigungssensor misst die Beschleunigung des Gebäudeverschlusselements in wenigstens einer Richtung, vorzugsweise in mehreren senkrecht aufeinander stehenden Richtungen, besonders bevorzugt in drei senkrecht aufeinander stehenden Richtungen. Der Magnetfeldsensor beschreibt hingegen das Magnetfeld, welches in der Umgebung des Gebäudeverschlusselements vorliegt. Beispielsweise kann anhand des gemessenen Magnetfelds auf eine Verlagerung der Flügel des Gebäudeverschlusselements gegeneinander erkannt werden. Der Positionssensor dient beispielsweise der Positionsbestimmung anhand eines Satellitennavigationssystems, insbesondere eines globalen Satellitennavigationssystems.

Der Drehwinkelsensor ermittelt den aktuellen Drehwinkel des Gebäudeverschlusselements, insbesondere einen geodätischen Drehwinkel, also eine Drehwinkelstellung im geodätischen Bezugssystem. Alternativ entspricht der Drehwinkel einer Drehwinkelstellung der beiden Rahmenelemente zueinander, also insbesondere des zweiten Rahmenelements bezüglich des ersten Rahmenelements. Beispielsweise wird der Beschleunigungssensor als Drehwinkelsensor verwendet und aus der auf das Gebäudeverschlusselement wirkenden Beschleunigung auf den Istdrehwinkel geschlossen. Mittels des Geräuschsensors wird ein Geräuschpegel gemessen, der in der Umgebung des Gebäudeverschlusselements vorliegt.

Mithilfe des Helligkeitssensors wird eine Helligkeit, mithilfe des Temperatursensors eine Temperatur, mithilfe des Wärmeflusssensors ein Wärmefluss, mithilfe des Staubsensors eine Staubdichte, mithilfe des Luftfeuchtigkeitssensors eine Luftfeuchtigkeit, mithilfe des VOC-Sensors eine Konzentration von flüchtigen organischen Verbindungen (VOC), mithilfe des CO₂-Sensors eine CO₂-Konzentration, mithilfe des O₃-Sensors eine Ozonkonzentration, mithilfe des Strömungsgeschwindigkeitssensors eine Strömungsgeschwindigkeit von Luft in der Umgebung des Gebäudeverschlusselements und mithilfe des Lidarsensors ein Abstand zu einem Festkörper in der Umgebung des Gebäudeverschlusselements erfasst.

Mindestens eine der genannten Größen dient dazu, Bedingungen zu erkennen, welche zu einer Beschädigung des Gebäudeverschlusselements führen können, sodass die Zustandsgröße den Zustand des Gebäudeverschlusselements widerspiegelt. Auf diese Art und Weise kann eine zuverlässige Qualitätskontrolle und eine zuverlässige Überwachung des Betriebszustands des Gebäudeverschlusselements realisiert werden, da auch die Umgebungsbedingungen des Gebäudeverschlusselements beurteilt werden, die dessen Zustand unweigerlich beeinflussen und daher als Zustandsgrößen gelten.

Die Erfindung betrifft weiterhin ein Netzwerk, insbesondere zur Durchführung des Verfahrens gemäß den Ausführungen im Rahmen dieser Beschreibung, mit mehreren Gebäudeverschlusselementen sowie einer, insbesondere von den Gebäudeverschlusselementen beabstandete, Zentralrecheneinrichtung. Dabei ist vorgesehen, dass das Netzwerk dazu vorgesehen und ausgestaltet ist, für mehrere, insbesondere jedes, der Gebäudeverschlusselemente unter jeweiliger Verwendung wenigstens eines Zustandsgrößensensors einen Wert einer das jeweilige Gebäudeverschlusselement betreffenden Zustandsgröße zu ermitteln, über eine Datenübertragungsverbindung an die Zentralrecheneinrichtung zu übermitteln und in dem entsprechenden Gebäudeverschlussdatensatz als Bestandteil eines Zustandsgrößenverlaufs über der Zeit abzuspeichern, wobei aus dem Wert der Zustandsgröße und/oder dem Zustandsgrößenverlauf sowie einem eines der Gebäudeverschlusselemente beschreibenden Parameter eine Information und/oder eine Handlungsempfehlung für das Gebäudeverschlusselemente bestimmt und an eine Anzeigevorrichtung und/oder das Gebäudeverschlusselement übermittelt wird..

Auf die Vorteile einer derartigen Ausgestaltung des Netzwerks beziehungsweise einer derartigen Vorgehensweise wurde bereits hingewiesen. Sowohl das Netzwerk als auch das Verfahren zu seinem Betreiben können gemäß den Ausgaben im Rahmen dieser Beschreibung weitergebildet sein, sodass insoweit auf diese verwiesen wird.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Schnittdarstellung eines Gebäudes mit einer Gebäudehülle sowie einem Gebäudeverschlusselement, sowie
- Figur 2: ein Netzwerk mit mehreren Gebäudeverschlusselementen sowie einer Zentralrecheneinrichtung.

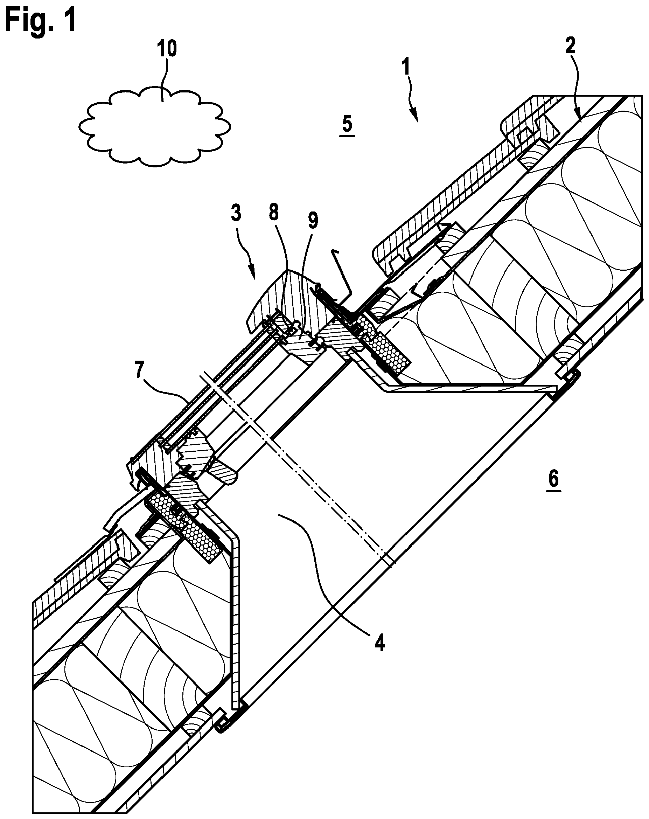

Die Figur 1 zeigt eine schematische Schnittdarstellung eines Gebäudes 1, welches eine Gebäudehülle 2 sowie ein Gebäudeverschlusselement 3 aufweist. Die Gebäudehülle 2 liegt in dem hier dargestellten Ausführungsbeispiel als Dach, insbesondere als Schrägdach, vor. In der Gebäudehülle 2 ist eine Ausnehmung 4 ausgebildet, welche die Gebäudehülle 2 vollständig durchgreift und insoweit eine Außenumgebung 5 des Gebäudes 1 mit einem Innenraum 6 des Gebäudes 1 verbindet, insbesondere strömungstechnisch und/oder optisch beziehungsweise lichttechnisch. Die Ausnehmung 4 ist mit dem Gebäudeverschlusselement 3 verschlossen, insbesondere strömungstechnisch. In dem hier dargestellten Ausführungsbeispiel liegt das Gebäudeverschlusselement 3 als Dachflächenfenster vor, welches über eine Verglasung 7 verfügt, sodass weiterhin eine optische Verbindung zwischen der Außenumgebung 5 und dem Innenraum 6 durch die Ausnehmung 4 hindurch vorliegt.

Das Gebäudeverschlusselement 3 verfügt über eine Sensoranordnung 8, die wenigstens einen Zustandsgrößensensor zur Erfassung einer Zustandsgröße des Gebäudeverschlusselements 3 aufweist. Die Sensoranordnung 8 ist in dem hier dargestellten Ausführungsbeispiel integraler Bestandteil des Gebäudeverschlusselements 3, sie kann jedoch auch von ihm separierbar sein. Sie ist beispielsweise in einen Blendrahmen 9 des Gebäudeverschlusselement 3 integriert. Die Sensoranordnung 8 wird vorzugsweise bereits während eines Transport- und/oder Montagevorgangs des Gebäudeverschlusselements 3 zumindest zeitweise zum Erfassen der Zustandsgröße betrieben. Es kann jedoch auch vorgesehen sein, die Zustandsgröße erst nach dem Transport- und/oder Montagevorgang zu erfassen.

Weiterhin gezeigt ist eine Zentralrecheneinrichtung 10, welche in dem hier dargestellten Ausführungsbeispiel als von dem Gebäudeverschlusselement 3 beabstandet angeordnete Zentralrecheneinrichtung ausgestaltet ist. Die Zentralrecheneinrichtung 10 steht zumindest zeitweise in Datenübertragungsverbindung mit der Sensoranordnung 8. In einer Trainingsbetriebsart der Transport- und/oder Montageüberwachungseinrichtung 10 ist es vorgesehen, dass die Zustandsgröße von der Sensoranordnung 8 an die Zentralrecheneinrichtung 10 übertragen wird. Zudem wird ein das Gebäudeverschlusselement beschreibender Parameter bestimmt und ebenfalls der Zentralrecheneinrichtung 10 zur Verfügung gestellt. Das Bestimmen des Parameters beziehungsweise seines Werts erfolgt beispielsweise durch manuelle Eingabe, beispielsweise an einem Mobilgerät.

Die Zentralrecheneinrichtung 10 ermittelt aus dem Parameter und der Zustandsgröße beziehungsweise dem Zustandsgrößenverlauf eine Korrelation. Diese wird zwischengespeichert. Vorzugsweise werden der Zentralrecheneinrichtung 10 der Parameter sowie die Zustandsgröße beziehungsweise der Zustandsgrößenverlauf nicht nur von dem einen Gebäudeverschlusselement 3 übermittelt, sondern jeweils von einer Mehrzahl an Gebäudeverschlusselementen 3. Wurden während der Trainingsbetriebsart hinreichend Parameter sowie Zustandsgrößen beziehungsweise Zustandsgrößenverläufe erfasst und bei der Ermittlung der Korrelation berücksichtigt, so wird von der Trainingsbetriebsart auf eine Überwachungsbetriebsart umgeschaltet. In dieser wird die Korrelation verwendet, um aus einer von der Sensoranordnung 8 übermittelten Zustandsgröße beziehungsweise einem Zustandsgrößenverlauf auf den Wert des Parameters für diese Sensoranordnung 8 beziehungsweise das entsprechende Gebäudeverschlusselement 3 zu schließen.

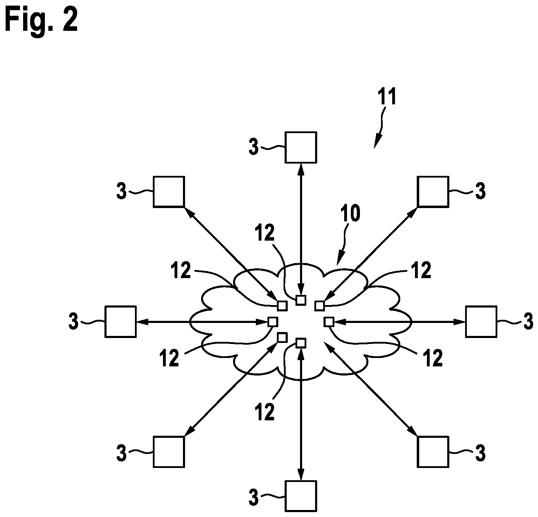

Die Figur 2 zeigt eine schematische Darstellung eines Netzwerks 11, das die Zentralrecheneinrichtung 10 und zusätzlich zu dem Gebäudeverschlusselement 3 weitere Gebäudeverschlusselemente 3 aufweist. In der Zentralrecheneinrichtung 10 ist für jedes der Gebäudeverschlusselemente 3 ein Gebäudeverschlussdatensatz 12 hinterlegt. Die Gebäudeverschlussdatensätze 12 enthalten jeweils einen Zustandsgrößenverlauf, der den Verlauf des Werts der Zustandsgröße über der Zeit wiedergibt. Aus den Zustandsgrößenverläufen und dem bereits erwähnten Parameter beziehungsweise wenigstens einem Wert dieses Parameters ermittelt die Zentralrecheneinrichtung 10 eine Korrelation. Liegt die Korrelation vor, so kann anhand dieser aus dem jeweiligen Zustandsgrößenverlauf auf den Wert des Parameters geschlossen werden. Aus dem Wert wird nachfolgend eine Information und/oder eine Handlungsempfehlung für ein bestimmtes Gebäudeverschlusselement 3 ermittelt und an dieses übermittelt. Dort wird beispielsweise die Information einem Benutzer des Gebäudeverschlusselements 3 angezeigt oder das Gebäudeverschlusselement 3 gemäß der Handlungsempfehlung betrieben.

Hierdurch wird eine vorausschauende Betriebsweise des Gebäudeverschlusselements 3 auf Grundlage einer großen Datenbasis erzielt, da nicht nur der Wert der Zustandsgröße beziehungsweise der Zustandsgrößenverlauf eines Gebäudeverschlusselements 3 und der Parameter herangezogen werden, sondern die Werte und Verläufe mehrerer der Gebäudeverschlusselements 3 in die Betrachtung einbezogen werden.

### BEZUGSZEICHENLISTE

- 1: Gebäude
- 2: Gebäudehülle
- 3: Gebäudeverschlusselement
- 4: Ausnehmung
- 5: Außenumgebung
- 6: Innenraum
- 7: Verglasung
- 8: Sensoranordnung
- 9: Blendrahmen
- 10: Zentralrecheneinrichtung
- 11: Netzwerk
- 12: Gebäudeverschlussdatensatz

## Patentansprüche

1. Verfahren zum Betreiben eines Netzwerks (11), wobei das Netzwerk (11) mehrere Gebäudeverschlusselemente (3) sowie eine, insbesondere von den Gebäudeverschlusselementen (3) beabstandete, Zentralrecheneinrichtung (10) aufweist, **dadurch gekennzeichnet, dass** für mehrere der Gebäudeverschlusselemente (3) unter jeweiliger Verwendung wenigstens eines Zustandsgrößensensors ein Wert einer das jeweilige Gebäudeverschlusselement (3) betreffenden Zustandsgröße ermittelt, über eine Datenübertragungsverbindung an die Zentralrecheneinrichtung (10) übermittelt und in dem entsprechenden Gebäudeverschlussdatensatz (12) als Bestandteil eines Zustandsgrößenverlaufs über der Zeit abgespeichert wird, wobei aus dem Wert der Zustandsgröße und/oder dem Zustandsgrößenverlauf sowie einem eines der Gebäudeverschlusselemente (3) beschreibenden Parameter eine Information und/oder eine Handlungsempfehlung für das Gebäudeverschlusselement (3) bestimmt und an eine Anzeigevorrichtung und/oder das Gebäudeverschlusselement (3) übermittelt wird.

2. Verfahren nach Anspruch 1, **dadurch gekennzeichnet, dass** in einer Trainingsbetriebsart der Zentralrecheneinrichtung (10) ein Wert des Parameters ermittelt und mittels der Zentralrecheneinrichtung (10) mit der Zustandsgröße und/oder dem Zustandsgrößenverlauf korreliert wird und/oder in einer Überwachungsbetriebsart der Zentralrecheneinrichtung (10) mittels der Zentralrecheneinrichtung (10) aus der Zustandsgröße und/oder dem Zustandsgrößenverlauf der Werts des Parameters ermittelt wird.

3. Verfahren nach einem der vorhergehenden Ansprüche, **dadurch gekennzeichnet, dass** die Information und/oder die Handlungsempfehlung in Abhängigkeit von dem Wert des Parameters bestimmt werden.

4. Verfahren nach einem der vorhergehenden Ansprüche, **dadurch gekennzeichnet, dass** der Wert des Parameters zumindest zeitweise erfasst und an die Zentralrecheneinrichtung (10) übermittelt wird, wobei bei dem Erfassen die Trainingsbetriebsart vorgenommen wird, und/oder dass nach dem Übermitteln des Werts der Zustandsgröße an die Zentralrecheneinrichtung (10) die Überwachungsbetriebsart durchgeführt wird.

5. Verfahren nach einem der vorhergehenden Ansprüche, **dadurch gekennzeichnet, dass** aus den Gebäudeverschlussdatensätzen für diejenigen Gebäudeverschlusselemente (3), die einen ersten Wert des Parameters aufweisen, anhand der Zustandsgröße und/oder des Zustandsgrößenverlaufs ein diese einfassender Wertebereich ermittelt wird, und aus den Gebäudeverschlussdatensätzen für diejenigen Gebäudeverschlusselemente (3), die einen von dem ersten Wert verschiedenen zweiten Wert des Parameters aufweisen, solche ermittelt werden, für welche die Zustandsgröße und/oder der Zustandsgrößenverlauf in dem Wertebereich liegen, wobei die Information und/oder Handlungsempfehlung für diese Gebäudeverschlusselemente (3) eine Änderung des Parameters von dem zweiten Wert auf den ersten Wert beschreibt.

6. Verfahren nach einem der vorhergehenden Ansprüche, **dadurch gekennzeichnet, dass** für mehrere der Gebäudeverschlusselemente (3) zumindest ein bei einer Herstellung des jeweiligen Gebäudeverschlusselements (3) festgelegter Gebäudeverschlussparameter in einem in der Zentralrecheneinrichtung (10) abgespeicherten Gebäudeverschlussdatensatz (12) abgespeichert wird.

7. Verfahren nach einem der vorhergehenden Ansprüche, **dadurch gekennzeichnet, dass** das Ermitteln und Übertragen des Werts der Zustandsgröße ab der Herstellung des jeweiligen Gebäudeverschlusselements (3) oder ab einem Ende eines Transport- und/oder Montagevorgangs des jeweiligen Gebäudeverschlusselements (3) vorgenommen wird.

8. Verfahren nach einem der vorhergehenden Ansprüche, **dadurch gekennzeichnet, dass** als Parameter eine Transport- und/oder Montagequalität verwendet wird und das Erfassen des Parameters nach dem Transport- und/oder Montagevorgang erfolgt.

9. Verfahren nach einem der vorhergehenden Ansprüche, **dadurch gekennzeichnet, dass** als Parameter eine Wartungsinformation verwendet wird und das Erfassen des Parameters im Falle einer Wartung des Gebäudeverschlusselements (3) erfolgt.

10. Verfahren nach einem der vorhergehenden Ansprüche, **dadurch gekennzeichnet, dass** zumindest eines der Gebäudeverschlusselemente (3) einen Aktuator aufweist und ein Ansteuerungsparameter für den Aktuator zumindest zeitweise in Abhängigkeit von einer Einstellung eines Bedienelements des Gebäudeverschlusselements (3) ermittelt wird, wobei der Aktuator in Abhängigkeit von dem Ansteuerungsparameter angesteuert und der Ansteuerungsparameter über die Datenübertragungsverbindung an die Zentralrecheneinrichtung (10) übermittelt und in dem dem Gebäudeverschlusselement (3) zugeordneten Gebäudeverschlussdatensatz (12) abgespeichert wird.

11. Verfahren nach einem der vorhergehenden Ansprüche, **dadurch gekennzeichnet, dass** als Parameter der Ansteuerungsparameter verwendet wird und der Aktuator zumindest zeitweise in Abhängigkeit von der Handlungsempfehlung angesteuert wird.

12. Verfahren nach einem der vorhergehenden Ansprüche, **dadurch gekennzeichnet, dass** als Parameter einer der folgenden Parameter verwendet wird: der zumindest eine Gebäudeverschlussparameter, der Ansteuerungsparameter und ein von einer von dem Gebäudeverschlusselement (3) verschiedenen Datenquelle an die Zentralrecheneinrichtung (10) übermittelter Lokalinformationsparameter, eine mittels einer Eingabeeinrichtung erfasste, den Komfort eines Benutzers des Gebäudeverschlusselements (3) beschreibende Komfortgröße und eine Energieeffizienz des Gebäudeverschlusselements (3).

13. Verfahren nach einem der vorhergehenden Ansprüche, **dadurch gekennzeichnet, dass** als der zumindest eine Gebäudeverschlussparameter ein Ausstattungsparameter verwendet wird, wobei der Ausstattungsparameter für ein erstes der Gebäudeverschlusselemente (3) den ersten Wert und für ein zweites der Gebäudeverschlusselemente (3) den zweiten Wert aufweist.

14. Verfahren nach einem der vorhergehenden Ansprüche, **dadurch gekennzeichnet, dass** als Zustandsgrößensensor wenigstens einer der folgenden Sensoren verwendet wird: Beschleunigungssensor, Magnetfeldsensor, Positionssensor, Drehwinkelsensor, Geräuschsensor, Helligkeitssensor, Temperatursensor, Wärmeflusssensor, Staubsensor, Luftfeuchtigkeitssensor, VOC-Sensor, CO₂-Sensor, O₃-Sensor, Strömungsgeschwindigkeitssensor und Lidarsensor.

15. Netzwerk (11), insbesondere zur Durchführung des Verfahrens nach einem oder mehreren der vorhergehenden Ansprüche, mit mehreren Gebäudeverschlusselementen (3) sowie einer, insbesondere von den Gebäudeverschlusselementen (3) beabstandete, Zentralrecheneinrichtung (10), **dadurch gekennzeichnet, dass** das Netzwerk (11) dazu vorgesehen und ausgestaltet ist, für mehrere der Gebäudeverschlusselemente (3) unter jeweiliger Verwendung wenigstens eines Zustandsgrößensensors einen Wert einer das jeweilige Gebäudeverschlusselement (3) betreffenden Zustandsgröße zu ermitteln, über eine Datenübertragungsverbindung an die Zentralrecheneinrichtung (10) zu übermitteln und in dem entsprechenden Gebäudeverschlussdatensatz (12) als Bestandteil eines Zustandsgrößenverlaufs über der Zeit abzuspeichern, wobei aus dem Wert der Zustandsgröße und/oder dem Zustandsgrößenverlauf sowie einem eines der Gebäudeverschlusselemente (3) beschreibenden Parameter eine Information und/oder eine Handlungsempfehlung für das Gebäudeverschlusselement (3) bestimmt und an eine Anzeigevorrichtung und/oder das Gebäudeverschlusselement (3) übermittelt wird.
